# EUROPEAN PATENT APPLICATION

(11) **EP 4 821 344 A1**
(43) Date of publication of application: **14.10.2026**
(21) Application number: 24900041.5
(22) Date of filing: 04.12.2024
(51) Int. Cl.: A01G 9/02

(54) **STACKABLE MODULAR PLANT POT WITH IMPROVED SOLAR EXPOSURE AND STABILITY**

(30) Priority: 04.12.2023 ES 202331006
(71) Applicant: Eidopia S.L., 19171 Cabanillas del Campo, Guadalajara (ES)
(72) Inventor: GARCIA RODRIGUEZ, Lucas, 28049 Madrid Madrid (ES)
(86) International application number: PCT/ES2024/070763
(87) International publication number: WO 2025/120249

(57) **Abstract**

A modular pot structure, stackable in height, is constituted by superimposed modules. Each module is formed by a twisted trunk having a non-circular base contour that is geometrically identical to its upper contour but rotated by an angle (Δ) and displaced by a height (H) relative to the vertical axis. The coupling between modules occurs between the base contour of an upper module and the upper contour of a lower one. This engineered torsion generates preferential regions where the trunk's surface is brought closer to the structure's axis. Arms containing substrate or pots are located in these regions to: (i) be closer to the axis, improving stability; (ii) provide a larger cultivation area, increasing capacity; and/or (iii) create more space for plant growth. The resulting structure forms a single continuous surface with arms distributed in successive, rotated ramifications.

## Description

The object of the present invention is a modular pot, stackable in height, allowing for the configuration of a vertical garden structure for growing plants when stacked with others. This structure is generally formed by modules of identical pots and is distinguished by a configuration and spatial distribution of its component modules based on the torsion of their trunk. This torsion provides greater structural stability against external disturbances and load imbalances from the different weights of the plants. Furthermore, it allows for greater utilization of the space occupied by the structure by optimizing the growing area per module, as well as providing more available space for each plant. This improves their distribution and sun exposure, resembling the natural distribution of tree branches and reducing interference between neighboring plants.

The invention is based on the principle that an appropriate rotation or torsion of the trunk of each module, with a contour that is generally not symmetrical with respect to the vertical axis of the structure, causes an alteration of the trunk that generates constrictions or empty spaces. These spaces can be utilized to bring the pot compartments closer to the vertical axis to center the load and gain stability, to enlarge them and increase capacity, or simply to have more space available for the plant. Likewise, said rotation allows for the optimization of the pot distribution in relation to its neighbors to improve sun exposure and minimize interference between them.

The invention is applied as a pot structure if the hollows of the arms contain substrate and plants, or as a pot holder structure if the hollows are intended to hold individual pots or containers.

### TECHNICAL FIELD.-

The technical field of the invention is that of receptacles such as pots and pot holder for growing plants and flowers; in particular, that of vertically stackable pots and pot holders.

### BACKGROUND OF THE INVENTION.-

The main advantage of pots and pot holders arranged in vertical configurations, compared to conventional versions, is that they increase the utilization of the available area for planting and cultivation.

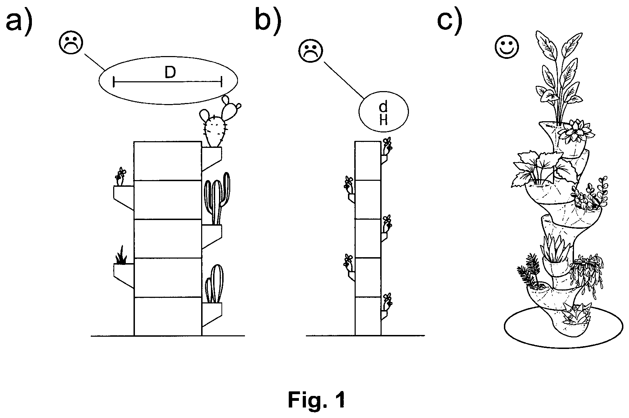

Typically, these systems have a large central cylindrical trunk in a vertical position with openings along its surface (see **Figure 1a****).** Two main types can be conceptually distinguished: i) those that have an additional structural element that supports the pots themselves and which, although part of the system, is a clearly distinct element from the pots themselves, serving no other purpose than support, and ii) systems of self-supporting modules, i.e., where the pot itself has a dual structural function of supporting the system and serving as a pot. The present invention falls into the second category, that of stackable pot systems with self-supporting modules.

In the first category, we can find the stackable pot system presented in model ES0257469-U, formed by pots supported by a tube, presumably metallic, or the systems described in patents with publication numbers CN208402608U and US00D55822S, which, although not modular systems, are also a clear example of this category where two distinct types of elements with different functions are clearly distinguished: the pot and a tube, whose sole function is to support the pot.

Examples of pot structures of the second category, that of systems with self-supporting modules like the present invention, are those corresponding to patent GB2066632 A, which is designed for hydroponic cultivation, with four openings that act as a connecting window between the trunk, where the roots are located, and the exterior; the one described in model ES1028581-U, very similar to the previous one; or that of utility model ES0215649-U, or patent US4779378A. All of these present a staggered distribution of pots by design, except for ES0215649-U, which can be configured with an unrestricted distribution of cultivation openings, as they can rotate freely with respect to their neighbors, leaving the orientation to the discretion of the end-user, which could worsen the performance (sun exposure and shading) and stability of the system.

In all these cases, the dimension of the opening is approximately an order of magnitude smaller than the dimension of the trunk diameter **(****Figure 1a****),** which prevents the system from housing large plants and thus ensures good system stability. Furthermore, the openings are literally attached to or embedded in the cylindrical surface, constraining the growth of the plant, which generally forces diagonal growth due to lack of space. Lastly, the plants do not have their own compartment but share it with their neighbors on the same level, unlike the concept presented in document ES0257469-U, where it can be configured with individual compartments, one per module.

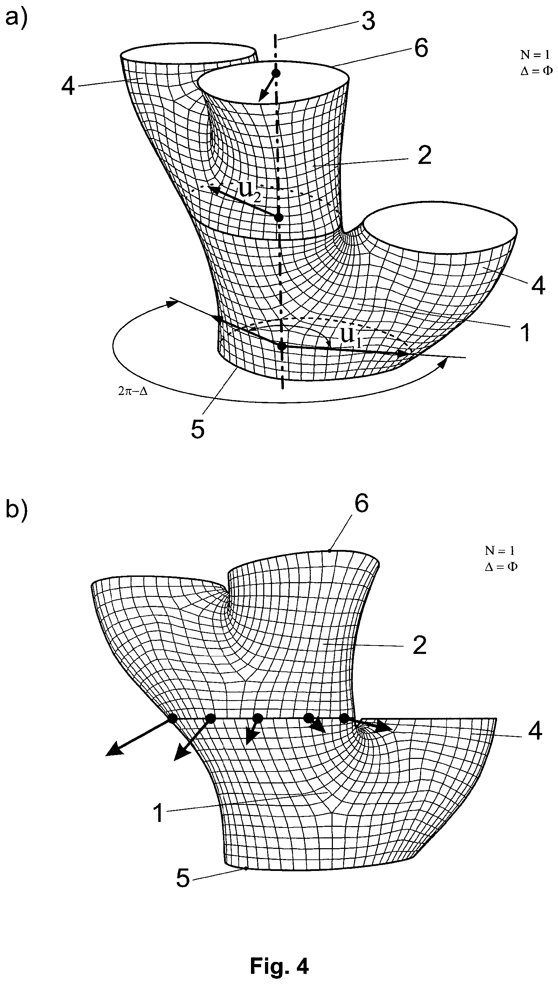

Model ES0193127-U is based on a central trunk in the shape of a hexagonal-based prism, conceptually similar to that of **Figure 4b****,** which limits the distribution of the pots to six orientations. Like all the previously mentioned systems, it is configured in a staggered arrangement, except for ES0215649-U, which has a free orientation. In this case, the openings do indeed act as pots, configured as cantilevered elements attached to the prism. This demands greater stresses that must be compensated for with materials resistant to fatigue and load, with a high degree of toughness, which are more expensive.

There are also cases that, although not modular systems, are related to the present invention, such as reference CZ35470U U1, a monolithic tube with openings distributed according to the golden angle. It is noteworthy that a variant is presented in which the openings are smaller in the upper region of the tube, thus reducing the weight in the upper zone, which is technically one of the most critical points in this type of system. In this way, it reduces the leverage force at the base area due to external disturbances, such as wind gusts, or imbalances caused by heterogeneous plants with different weights.

On the other hand, documents CN 208402608U and US00D400822S present structures based on bent tubes. The former mimics branches that end in a compartment to house the plant, and in the second case, it is a bent tube to which cups are laterally attached in a cantilevered manner to house the plants. This product is formed by two distinct pieces that join at a shared tubular interface having an elliptical cross-section. Both tubes adopt different curves based mainly on aesthetic criteria, and each cup is different, also located diametrically opposed to each other to balance the weights. Lastly, the concept described in patent CN218550720U consists of a pot based on a rectangular-based prism, in which two lateral faces are its two largest faces, which are squares, and from one of them, a circular opening emerges that holds a pot and integrates a drip irrigation system.

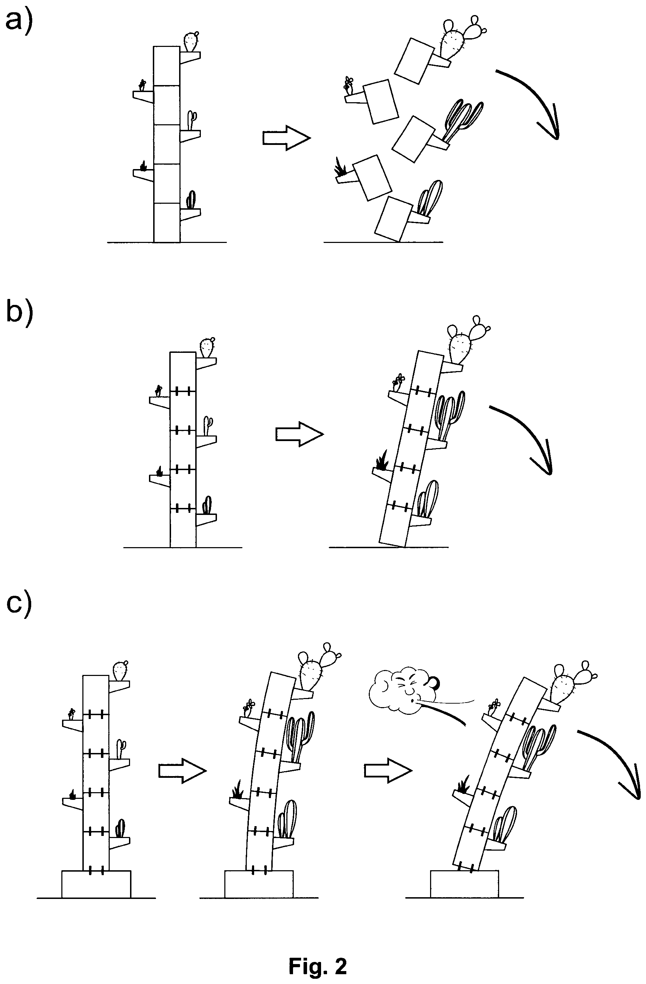

There is an inherent problem in modular vertical garden systems related to the stability of the structure **(****Figure 2****),** which, in turn, determines the capacity of the pot in relation to the radius of the structure. Structures with very large trunk diameters **(****Figure 1a****)** and/or smaller compartments **(****Figure 1b****)** are more stable, while structures with large cultivation opening diameters and thin trunks are generally more unstable and/or require more demanding and expensive materials. This is why the vast majority of the configurations in the state of the art are presumed to be made of low-cost plastic resin such as polypropylene or polyethylene and present a very small cultivation opening diameter with respect to the diameter of the support structure. However, although at a higher cost/capacity ratio, there also exist structures conceived in materials of high toughness and load resistance (metallic materials), such as those presumed in the structures corresponding to documents ES0257469-U, ES0193127-U, CN208402608U, and US00D400822S.

The present invention proposes a pot suitable for being manufactured from a material of relatively low toughness and low cost, such as a low-density linear polyethylene resin, although it is also compatible with other materials. Avoiding more tough materials like a metal tube or bar is also a technical advantage, by conceiving a more robust structure at a lower cost.

On the other hand, many of these systems, such as the one corresponding to patent GB2066632-A, are designed for hydroponic cultivation, where the same type of plants are generally housed and are also in the same growth phase, resulting in plants of similar weight and size that ensure the structure's weights are balanced. Likewise, many hydroponic cultivations are installed in greenhouses, free from wind gusts.

However, the essential problem is that, in general, the weight distribution of the various plants is difficult to control by design; rather, it is established by the user and the plants' own evolution and growth **(****Figure 2****).** That is, a structurally balanced design does not ensure that the system in use is balanced. This problem requires a greater technical challenge than that of intensive cultivation systems.

The main technical limitations that prevent increasing the ratio of cultivation opening diameter vs. trunk diameter are primarily because it compromises the structural stability of the system due to i) a load imbalance in the structure derived from having plants of heterogeneous weight (Figures 2a and 2b), and/or ii) an external disturbance, such as horizontal wind loads. This can cause either the collapse of the modules, which separate from each other, or, if they are bolted together, the collapse of the entire structure (Figures 2b and 2c).

Adding a stabilizing plate at the base mechanically anchored to the first module helps to prevent this, as shown in **Figure 2c****,** but a system with unbalanced loads with one or more plants of excessive weight and/or the wind load causes a significant leverage force that makes the column bend, especially when it is made of plastic, and can lead to the fracture of the mechanical joint between the base and the first module, and/or the system falling over, if that disturbance causes a horizontal displacement sufficient for the center of mass to fall outside the convex hull of the base.

Apart from reducing the weight in the upper parts of the system, which is what the invention CZ35470U U1 proposes, a review of the current state of the art does not seem to reveal any solution other than increasing the system's diameter in relation to the cultivation opening's diameter.

The essential strategy adopted by the present invention to partially mitigate the problem is to better center the pot's loads relative to the structure's vertical axis, or alternatively, to intentionally unbalance the component modules by design so they compensate for one another once the plants are added, resulting in a more stable system. This has been achieved through a torsion of the trunk that, for purely geometric reasons, generates preferential regions where the surface of the trunk moves towards the system's axis. It is obvious that the more centered the weight of the plants is with respect to the axis of the structure, the less dependence there is on the heterogeneity of loads and the leverage effect it causes, presenting a system with greater stability.

On the other hand, all the referenced modular systems have a distribution where the pots are staggered with their adjacent modules, except for the one corresponding to ES0215649-U, whose distribution (and stability) is left in the hands of the end-user. Thus, neighboring modules will cast shade and limit the available space for the plant, as it will experience interference from said module.

The present invention proposes a vertical garden system that distributes the plants in the most efficient and homogeneous way, based on a distribution governed by the golden section, imitating the growth rules governed by plants, which is similar to the proposal CZ35470U U1, but for the case of a modular system of independent modules. This enables an improvement in the plant's sun exposure and an increase in the space available to the plant by reducing interference with neighboring plants.

Furthermore, existing solutions are based on trunk contours with a high degree of symmetry which, for purely geometric reasons, necessarily forces their arms to be suspended in a cantilevered, balcony-like manner, causing an ineffective load transmission that leads to material stress, deformations, and, in the long run, fractures. However, the proposed solution, due to the way it is conceived, accepts asymmetrical contours and, therefore, for geometric reasons, allows the branch to rest directly on the base of the trunk and not be cantilevered, which allows for a much more efficient and distributed load transmission.

Moreover, the preferred configuration of the vertical garden invention is presented with self-supporting modules with a single branch, which is a unique configuration in the market made possible by improving the stability of current systems. This represents a significant technical challenge. In addition, the diameter of the cultivation opening is approximately an order of magnitude larger than that of existing self-supporting stackable pot systems.

This has been achieved thanks to a construction system that, in essence, is based on each self-supporting pot or pot holder module used being a component that is formed by a trunk with a continuous surface, with branched arms, which undergoes a torsion with respect to the vertical axis of the structure, with the contour of the lower and upper bases being identical, one rotated with respect to the other. This generates, for a mere geometric reason, constrictions or empty spaces that are preferential regions in which the arms and cultivation openings can be located. Furthermore, iv) said torsion of the trunk makes it possible for the stacking between modules to occur by rotation and coupling of the lower base of the trunk of the upper module with the upper base of the trunk of the lower module, regulating the distribution of the pots in the structure, enabling a distribution governed by the golden ratio, which maximizes sun exposure and minimizes interference between neighboring plants.

### SUMMARY OF THE INVENTION.-

The stackable pot system presented is based on the natural growth of plants, which relies on very simple rules that give rise to complex structures. The growth rule is based on devising pot modules, with identical shapes, that confer an organic structure through copying, translation H, and successive rotation Δ of each module.

Specifically, the claimed stackable modular pot with improved sun exposure and stability is characterized in that the contour of the base of each component module, being of an arbitrary shape that is not a circle centered on the axis, is identical in geometry to the contour of the upper part of the trunk of the same module, rotated by an angle Δ and displaced by a distance H in height with respect to the vertical axis. The coupling between modules thus occurs between the contour of the base of the upper module and the contour of the upper part of the trunk of the lower module, with both contours matching. It is further characterized in that the arms with the cultivation openings are located in the areas of the trunk surface closest to its vertical axis, which are present as a consequence of the geometric torsion produced by the rotation of the trunk's end contours. This results in the structure having a single, continuous exposed surface, with the arms of the thus-coupled modules forming hollow bodies in successive ramifications with different degrees of rotation. Said torsion of the trunk ends creates preferential regions in which the arms can i) be closer to the axis to improve the structure's stability, or ii) have a larger cultivation area for greater pot capacity, or iii) have openings more distant from the trunk to provide more space available for the plants.

This structure of stackable pots or pot holders essentially presents a single, connected, continuous surface, generally rounded, free of sharp edges, and with a smooth inclination transition between the trunk and the branch to prevent the accumulation of dirt and cobwebs and to facilitate cleaning.

By conveniently selecting the angle Δ of rotation of the trunk with respect to the vertical axis between neighboring modules and the number and arrangement of the arms, advantageous pot configurations are achieved. In particular, if the angle Δ is the golden angle Φ divided by the number of arms (Δ = Φ/N = π*[3-5^(1/2)]/N), and the projection angle δi of the "i" arms on the horizontal plane with respect to their neighboring "i+1" arms is 2π/N (δi = 2π/N, ∀i), the branched arms of each pot module will be equiangularly distributed. And if the angle Δ is the golden angle Φ multiplied by the number of arms (Δ = Φ*N* = *π*[3-5^(1/2)]*N), and the projection angle δi of the "i" arms on the horizontal plane with respect to their neighboring "i+1" arms is the golden angle (δi = Φ, ∀i), the successive modules of the pot will follow a distribution similar to the natural distribution and growth of plant branches, with the consequent advantages in terms of maximizing light exposure and available space for the plant, minimizing interference between them.

As a preferred embodiment, a stackable pot structure is proposed in which each pot module has only one arm (N = 1), has no symmetry, and the angle Δ of rotation of the trunk with respect to the vertical axis between neighboring modules is the golden angle (Δ = Φ = π*[3-5^(1/2)]).

The branched arm or arms attached to the trunk of the modular pot can be straight or curved, simple or composed of other arms. For example, for the preferred embodiment of a pot module with a single arm, this can be a simple curved arm, or a compound one, ending in two straight or also curved arms, with a whole range of possibilities.

Regarding the size of the component modules of the structures, the preferred option is to have identical pot modules, to economize on manufacturing and installation.

And as for the surface finish of the pots, which can be of any material and texture depending on the space and environment of its location, the advantageous possibility is contemplated of a surface with surrounding stripes or slices between the lower base of the trunk and the upper part of the arms and trunk, as this visually conceals the joint between superimposed modules.

For practical and installation purposes, the pots may feature a fastening or anchoring system for the superimposed modules that ensures their perfect seating, while also providing stability to the assembly. Three alternative types of mechanical adjustment and connection systems between pot modules have been envisaged, via the contours of the upper part and base of each module's trunk:
a) A system of key pieces with through-holes on a peripheral flange at the contour of the upper part, and through-bores for threaded screws with nuts at the contour of the base;
b) A system of through-bores for threaded screws with nuts at the contours of the upper part and base; or,
c) A system of a peripheral fitting guide at the contour of the base, complementary to the perimeter of the hollow contour of the trunk of the upper part.

Once the stackable pot structure is assembled, the hollows of the branched arms of the successive modules are normally occupied by substrate and plants, such as pots or cultivation vessels, but they can also receive other pot modules by any of the indicated mechanical adjustment and connection systems, or form fractal structures of ramifications with successive stacked pot modules. Each pot module can be defined by the resulting geometry of two or more contiguous pots, forming its own pot module.

The hollows of the branched arms of the structure can also be occupied by individual pots or containers, thus forming a stackable modular pot holder structure.

In the usual case where the hollows of the ramifications of the assembled pot contain substrate and plants, a specific gravity-fed irrigation system has been provided, as an advantageous method compared to what is commonly used in pots of the same type. This irrigation system is configured by installing one or more water reservoirs in the hollows of one or more pot modules, with the upper reservoir potentially being equipped with an automatic water level detector, along with a downpipe from the upper reservoir to the hollows of the lower modules, which passes through the base of each pot via a hole made for this purpose. This conduit can directly access the interior of the substrate contained in the hollows or cultivation vessels through ramifications ending in water dispensers, by means of porous material or a drip device, or it can connect the other reservoirs if they are provided, from which the same type of water-dosing ramifications can extend. All of this is explained with reference to the figures in the following embodiment section.

### Technical Advantages.-

The main technical advantage of the developed stackable pot with respect to existing solutions is that:
- It improves light exposure, minimizes interference between pots, and maximizes available space due to an optimal distribution of the pots with respect to each other, similar to solutions found in nature (Phyllotaxis).
- It improves structural stability against load imbalances from heterogeneous plants and external disturbances, as it allows the weight of the plants to be located in regions closer to the axis E of the structure.
- It improves the spacing between the trunk and the plant, also increasing the space available for the plant and light exposure.
- It allows for larger cultivation openings for the branches, given that there is more space in the preferential region where the trunk surfaces are closer to the structure's axis, improving the pot's capacity.
- It allows the branch to rest on the base of the trunk, preventing it from being cantilevered, which distributes the load of the branch directly to the base of the trunk, reducing material stress and allowing for more economical materials and/or smaller thicknesses (less material).
- Since it allows for pots whose base is not symmetrical, the mounting position is unique, which ensures correct assembly, without the possibility of leaving the stability and orientation of the pots in the hands of the installer and the user.
- It allows for pots with a ratio of pot area versus cultivation opening area approximately an order of magnitude larger than existing similar systems.
- It enables the stacking of pots without the need for anchoring systems, as the trunk design allows for balancing the load of the branch, acting as a counterweight and reducing the torque generated by the weight of the plant and branch.

### FIGURES AND DRAWINGS.-

For a better understanding of the claimed modular pot, a series of figures with illustrative drawings are attached at the end of this specification.
**Figure 1** illustrates strategies to avoid the problem of load imbalance due to plants with heterogeneous weights. **Figures 1a** and **1b** show the strategies adopted by existing solutions, based on increasing the ratio of the trunk diameter to the cultivation opening diameter, resulting in a large trunk or a small opening. **Figure 1c** illustrates the proposed invention with heterogeneous plants, with a considerably larger ratio of cultivation opening to module area.
**Figure 2** represents the existing problem in current structures due to load imbalance from plants with heterogeneous weights. In **Figure 2a****,** there is no anchoring between modules. In **Figure 2b****,** there is anchoring only between modules. In **Figure 2c****,** there is anchoring between modules and between the lower module and a stabilizing base or plate. Even in this case, the system suffers a torque that will be greater the farther the load is from the system's axis, causing structural stresses that lead to the system bending and/or a rupture or failure in the anchoring system, which can be aggravated by external disturbances, causing the collapse of the system.
**Figure 3** is an illustrative graph of the structural scheme of the pot module of the invention. **Figure 3a** shows it in three-dimensional space, and **Figure 3b** in the horizontal xy plane.
**Figure 4** shows two perspective views, a) and b), of a preferred configuration of a stackable pot with two modules, each with one arm, in which the boundary conditions and periodicity of the ramifications of the two modules can be seen, where the upper module connects by its base to the upper part of the trunk of the lower module.
**Figure 5** shows a preferred embodiment in which the space available for the plant is indicated by a hatched region.
**Figure 6** represents in perspective a series of structures composed of stackable pot modules, increasing in height from a single module up to nine assembled and stacked modules, based on the preferred design of the pot module of the present invention, with all modules being identical.
**Figure 7** is a perspective view of a stackable pot structure in which the modules, being identical in shape, progressively decrease in size as the structure grows vertically.
**Figure 8** shows a representation of fractal structures composed of pot modules according to the proposed invention, illustrating both the resulting structure **(****Figures 8a, 8b, 8c****)** and the module that forms it in different views **(****Figures 8d, 8e, 8f****).** There is only one type of module.
**Figure 9** represents a top view of fractal structures composed of pot modules. **Figure 9a** illustrates a system in which each level of the fractal has identical modules, which are proportional to the other levels. **Figure 9b** presents a fractal system that always uses the same module but uses a connecting module for the level transition.
**Figure 10** illustrates, through several drawings of assembled modules in longitudinal cross-section and component parts in perspective, the detail of the three mechanical assembly and connection systems for the component modules of the stackable pot via the contours of the upper and lower bases of each module's trunk: a) Key piece system; b) Through-bore system; c) Peripheral fitting guide system.
**Figure 11** shows in perspective a composition of three pots with one branch per pot (N = 1) whose surface has a texture of surrounding stripes or slices, the relief of which is shown in detail in the drawing on the left of one of the component modules.
**Figure 12** is an isometric view of the lateral anchoring system of a stackable pot configuration to a wall or facade structure. The drawing in **Figure 12a** shows that the attachment is at the base of one of the pot modules, and **Figure 12b** shows the anchoring element.
**Figure 13** shows in longitudinal cross-section a stackable pot with an integrated gravity-fed irrigation system, according to three possibilities, a), b), and c), of water reservoir, conduit, and irrigation end arrangements.
**Figure 14** shows six perspective views of a preferred design of pot module of the invention, consisting of a trunk with upper and lower bases shaped similarly to an ellipse and a single branched arm with a hollow part whose end has a contour similar to a circle, showing the detail of the contour of the trunk bases where the neighboring modules are assembled.
**Figure 15a** and **15b** show different arrangements of branches (circles) with respect to an arbitrary trunk contour, for different positions of the structure's axis and different numbers of branches, based on the design criteria that confer the advantages of the present invention, with those corresponding to **Figure 15a** being those in which the center of mass coincides with the axis of the structure. **Figure 15c** presents examples in which the branch is positioned outside the preferential regions, far from the axis, which worsens stability and is therefore not recommended.
**Figure 16** shows the design steps of a module of the present invention for a general case based on surface lofting.
**Figure 17** illustrates design criteria in a preferred embodiment, with the upper opening being close to the axis, which is represented by a cross in **Figure 17a****,** and in which a non-symmetrical contour has been defined, with a shape similar to an oval or an ellipse, whose center of mass is displaced from the structure's axis, opposite the cultivation opening, to provide partial compensation for the weight of the branch. **Figure 17a** shows a top view and **Figure 17b** a side view schematically indicating said weight compensation.
**Figure 18a** shows a trunk generated by a sweep with torsion of an arbitrary contour whose center of mass is aligned with the structure's axis, while in **Figure 18b** it is not aligned. In both cases, the trunk presents regions on its surface closer to the system's axis.
**Figure 19** shows case studies of stackable pot structures based on an extruded trunk according to the current state of the art. As the contour becomes less symmetrical, it allows for a closer proximity between the branch and the axis, but the possible orientations are more limited.
**Figure 20** depicts configurations analogous to those of the preceding figure; however, the contours at the trunk's extremities feature a torsional twist, in accordance with the principles of the proposed invention. This removes the existing restrictions on orientation from the previous figures.

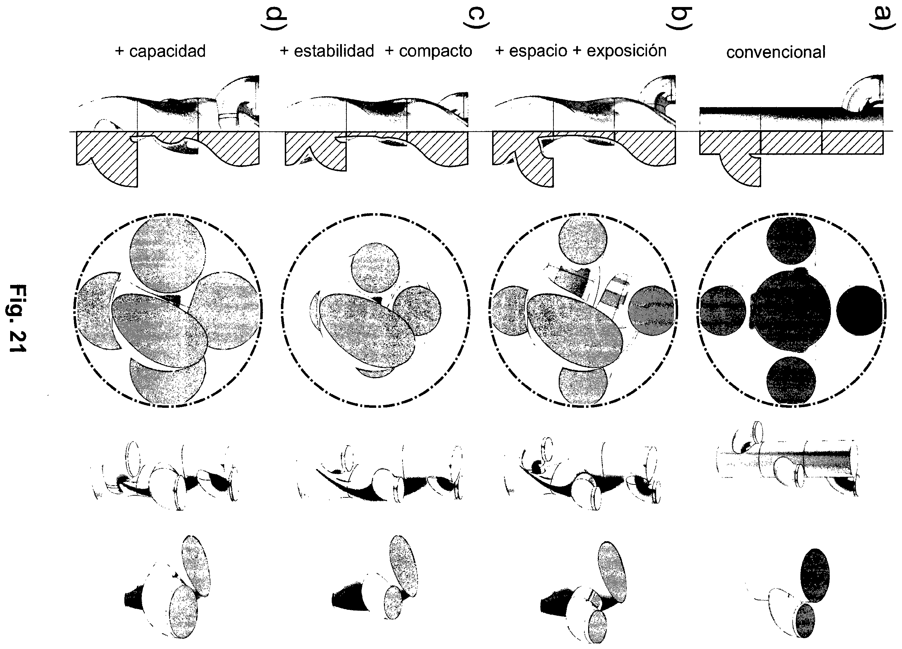

**Figure 21** clearly illustrates the advantages associated with a rotation of the module's trunk ends, characteristic of the present invention **(****Figures 21b, 21c, 21d**), and compares it with a generic case based on a cylindrical trunk **(****Figure 21a**) according to the current state of the art, showing visual evidence that the invention represents an improvement over the state of the art in terms of stability, space utilization, and module capacity. In all configurations shown, the volume and area of the trunk and cultivation openings are identical, and all are represented at the same scale.
Finally, **Figure 22** is a top view of the resulting surface from the rotation of a contour with respect to the structure's axis, which is at the origin. The center of mass is shown to be closer to the axis compared to the non-rotated case.

### DETAILED DESCRIPTION OF THE INVENTION.-

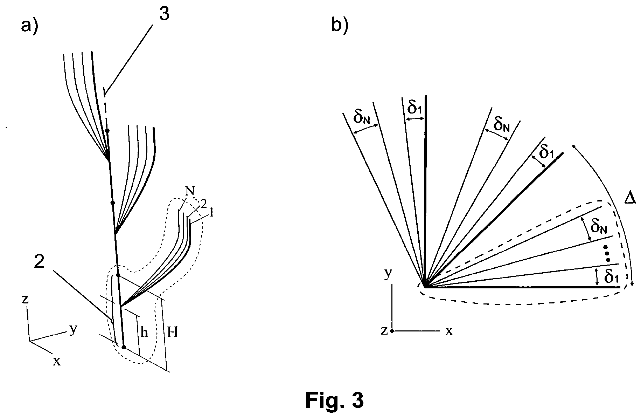

The abstract structure of the geometry of the claimed stackable modular pot of the invention can be described according to **Figure 3****,** which schematically illustrates a trunk (2) that extends a height H with respect to the vertical axis (3), and branched arms or "branches" (4) converging to a point on the trunk located at a distance h from its base. Each branch "i" forms a projected angle δi on the horizontal xy plane with respect to its neighboring branch "i+1". In the figure, this structure is repeated three times, displaced along the vertical axis (3) and rotated by an angle Δ. The particular curve of each branch is arbitrary and will depend on the design, and can be straight or curved, simple or compound. In this way, it is possible to optimize the three-dimensional distribution of the pots according to their application.

Based on these design parameters, a contour is established that defines the base of the pot. This contour is rotated by the angle Δ and translated a distance H with respect to the vertical. Likewise, a contour is established that defines the opening of each branch and is located at a height hi. In this way, all the essential geometric parameters of the system are defined. Subsequently, the surface of the trunk is generated by means of a lofting or sweep with rotation operation, which connects the lower contour of the base with the upper one of the trunk. Finally, analogously to the trunk, the surface of each branch is created, starting from the established contour. This yields the surface of the pot, which can be given a thickness to form a solid. In an optimization process, the generated surfaces can be altered as convenient, for instance by rounding them, always without altering the end contours of the trunk, which are the key elements that define the system.

As an additional condition, the lofting operation can be performed in such a way that the junction between modules provides a smooth surface, with continuity in the inclinations of the upper module's trunk in regions near its base with respect to the inclinations of the lower module's trunk in regions near its upper part. These geometric restrictions allow for a technically improved solution, since the resulting composite surface of the body (1), which we call the exposed surface, has no sharp edges, protrusions, or cavities, which reduces the accumulation of dust, dirt, and the formation of cobwebs, in addition to facilitating its cleaning.

**Figure 4** shows the boundary conditions and periodicity of ramifications of two stacked pot modules, each with one arm. The exposed surface of the body (1) of each module requires boundary conditions with severe restrictions, as the contour of the pot's base (5) must coincide exactly with the upper contour of the trunk (6), once rotated by an angle Δ and translated by a height H with respect to the vertical axis (3), which is not trivial if it is not a circle. This property is illustrated in **Figure 4a****.** Secondly, optionally as an additional requirement, the derivatives of the normal vectors, i.e., the surface inclinations in these regions of coincidence between the lower contour of the trunk and the rotated and translated upper contour of the trunk, must be the same. These regions where they share contours and tangent normal vectors are illustrated with arrows in **Figure 4b****.** In both figures (4a and 4b), the exposed surface of the body (1) with one arm (N = 1) is represented as a mesh, which as a whole forms a continuous, connected surface, free of sharp edges, with its derivatives also continuous, with smooth changes in inclination, where the upper contour of the trunk (6) is identical to the lower contour of the trunk (5) rotated by an angle Δ and displaced by the height of the trunk, H. In this way, points u1 and u2, where u2 is point u1 displaced a distance H along the vertical axis (3) and rotated by an angle Δ with respect to said axis (3), are the same point on contiguous modules. **Figure 4b** illustrates the tangents of the surface of the modules at the connection contours (5) and (6), which must be equal for contiguous modules.

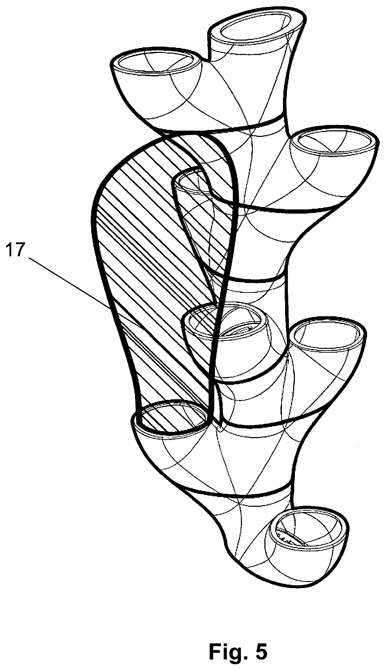

This system is of special interest in configurations whose referred angles δi and Δ are related to the golden angle Φ = π*[3-5^(1/2)], since practical advantages are observed in terms of light exposure and space available for the plant. In cases where Φ /N = π*[3-5^(1/2)]/N is met, the space available for the plant is substantially improved, as the interaction between neighboring pots is reduced. By way of illustration, this space is represented as a hatched region in **Figure 5****.**

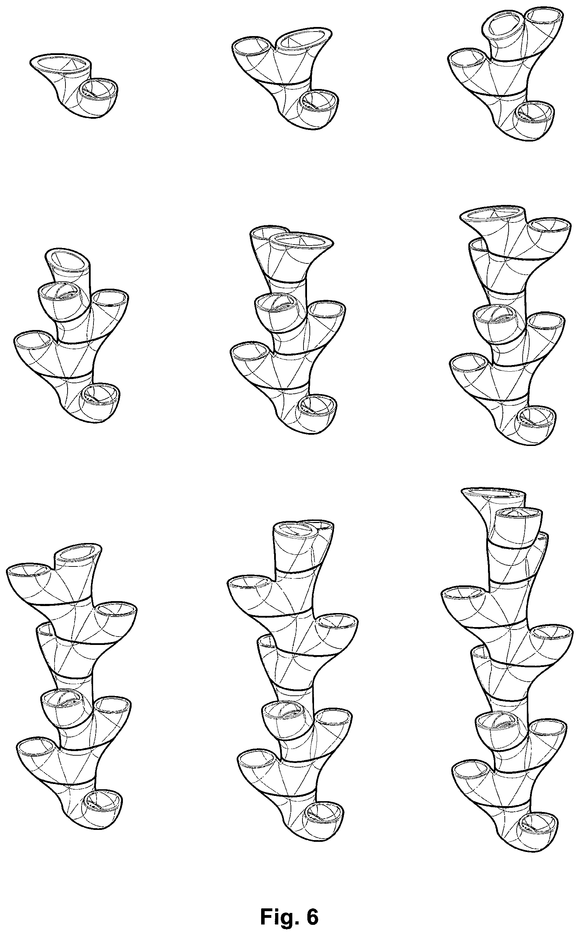

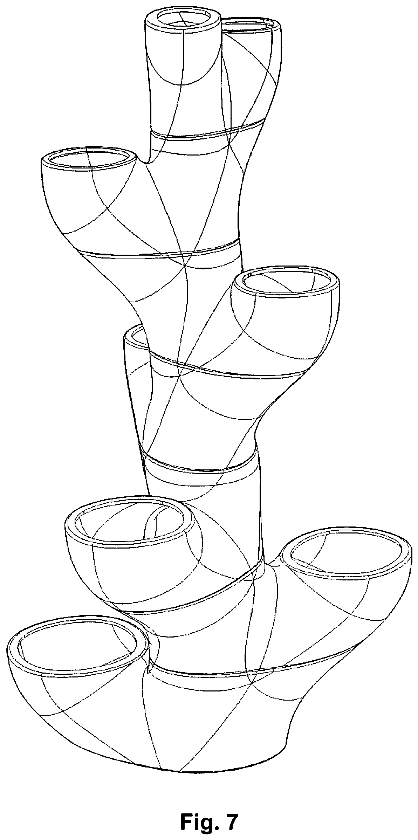

One of the most relevant advantages of the invention is the possibility for the modules to be identical, reducing the number of different components. This characteristic is presented in **Figure 6****.** Nevertheless, the system can be formed by identical modules of shape of different sizes or scales, such that the size decreases as the pot structure grows upwards, as illustrated in **Figure 7****.**

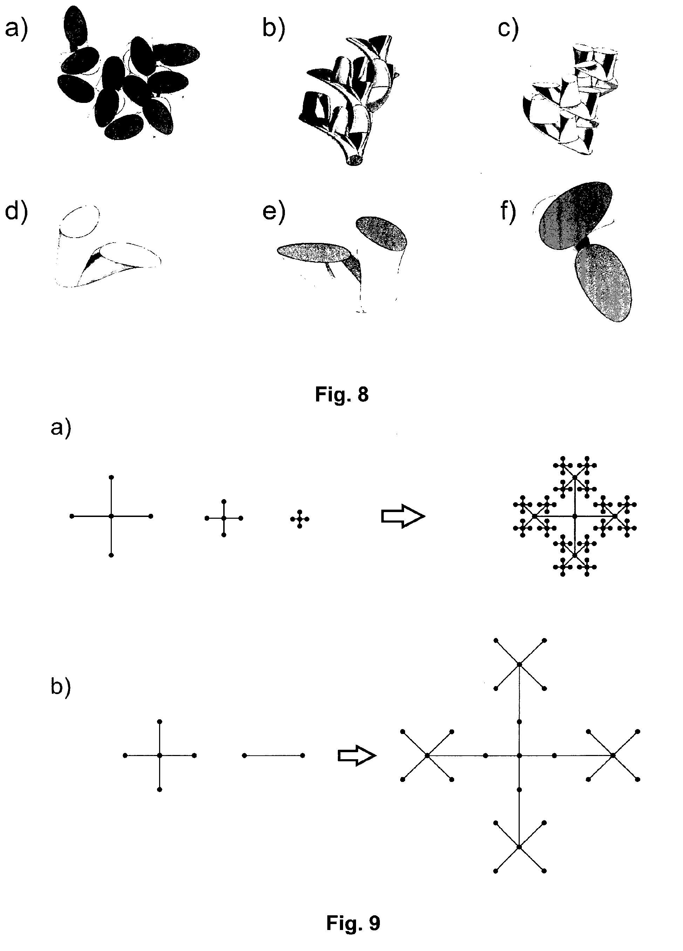

On the other hand, the ends of the arms of the pot modules, in addition to being intended to contain substrate and the plant itself, can also be intended for the reception of these same stackable pot structures, thus extending the functionality from a modular system of vertical growth to a modular system of branched or fractal growth. **Figure 8** shows a practical, non-limiting example of this type of branchable or fractal system, and **Figure 9** presents a schematic top view with modules with Δ = 90°. Figure 9a is constituted by three sizes of identical, scaled modules for each of the three levels, and Figure 9b with the same module for several levels, but with additional pieces for connection and change of fractal level.

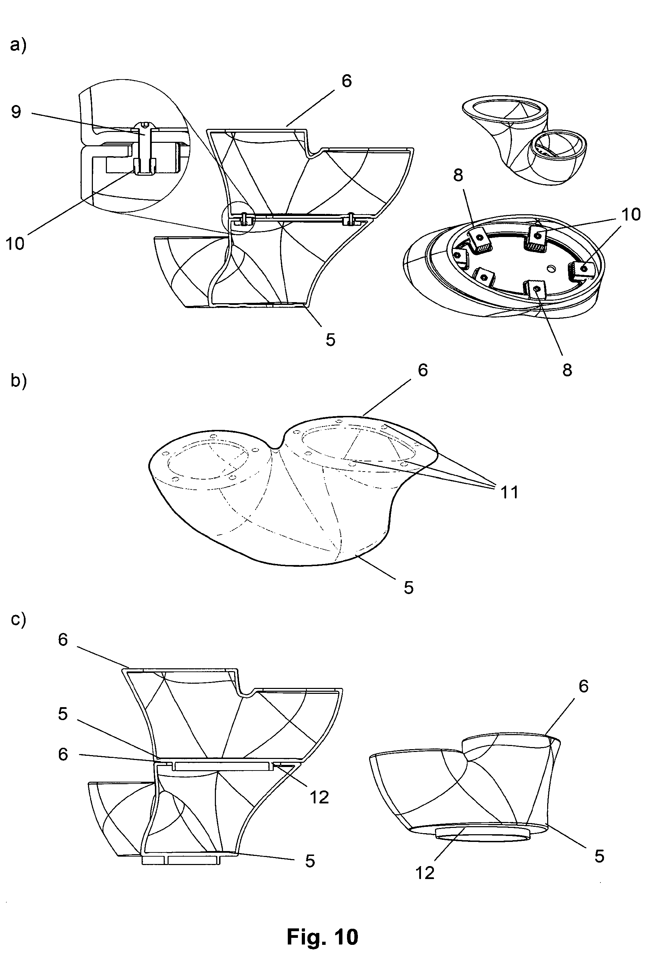

The connection system between modules can be implemented in multiple ways, adopting existing mechanical solutions. **Figure 10** illustrates three proposed strategies as non-limiting examples: in **Figure 10a****,** the connection is made by means of a key piece (8), which are additional parts that locate the module in predetermined positions, and which, together with a threaded screw (9) and a nut (10), clamps and joins a flange or wing originating from the upper face of a module's trunk with the lower face of its neighboring module's trunk, allowing for a robust mechanical connection between modules. In the lower right region, a section of said connection is shown, and in the upper left part, a detailed enlargement, both to facilitate the understanding of the mechanical solution. This solution does not require holes or openings in the upper part of the module, which improves the aesthetic perception. Another solution is to screw or rivet the contiguous modules by means of through-bores (11) arranged in the upper and lower part of the module, as illustrated in **Figure 10b. Figure 10c** shows a solution in which there is a fitting guide (12) that ensures the correct positioning of the coupled modules. This fitting guide can be in the upper part, the lower part, or both. Another solution would be to equip the module with a clip system for coupling between modules.

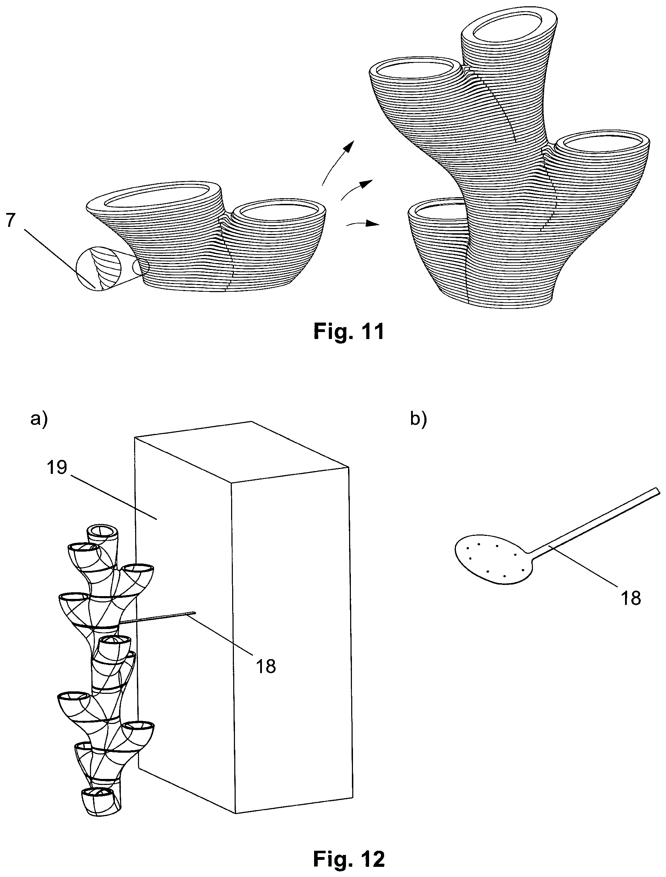

As shown in **Figure 11****,** the pot can have a surface texture in surrounding slices or stripes (7), or some other motif, so as to conceal the connection between contiguous pots and improve the aesthetic perception.

The pot structure can be anchored to a plate, which collects excess water and/or improves stability, a support, the ground, or similar, by means of screws, rivets, clips, or another anchoring element. The system can integrate a pedestal or a base trunk supplement at the ends or in any position between modules. The pedestal can be formed by several pieces. It is also suitable for being anchored to a wall or ceiling by means of an adapter for this purpose, such as a pedestal that bends 90 degrees. The system can have wheels to facilitate changing its location. Likewise, it is possible to add anchors or lateral fastening elements (18), as illustrated in **Figure 12****,** to anchor the system to a facade (19) or similar, which is convenient for very tall systems with many stacked modules.

This system can be equipped with a hydroponic pumping system powered by electrical current, batteries, or solar panels arranged or not on the structure itself. Likewise, the pot module can have a sponge, foam, cotton, or porous material as a substitute for the substrate.

Each module can incorporate a water reservoir in its lower part with one or several wicks that soak the substrate of the pot module, similar to the solutions adopted by conventional pots.

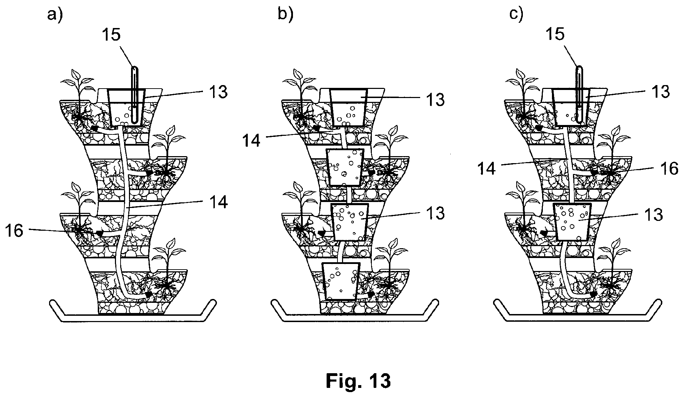

Additionally, the structure of modules can incorporate the gravity-fed irrigation system presented as also part of the invention, and schematized in **Figure 13****.** A drip irrigation system or water supply by means of porous material, with a water reservoir (13) in the upper part that irrigates the modules by gravity through the downpipe (14) from the upper reservoir, with outgoing ramifications ending in water dispensers (16) by means of porous material or a drip device. The reservoir can have a water level detector (15) and an autonomous communication system or one connected to the network, so that a notification is issued when low water is detected, to refill the reservoir. This figure shows three schemes of three different irrigation systems based on this gravity-fed irrigation. In **Figure 13a****,** there is only a single water reservoir integrated within the upper module of the system, so that it waters all the pot modules. In **Figure 13b****,** a similar irrigation system is presented where each module incorporates a reservoir, which increases the capacity and autonomy of the irrigation system. In **Figure 13c****,** a solution is presented in which only some modules integrate a water reservoir. This type of irrigation system allows for centralizing the watering of all plants in a single shared reservoir, making maintenance simple.

The manufacturing of this pot can be carried out industrially as a single piece by a process of rotational molding in plastic, in ceramic with a slip casting mold, or in aluminum by casting with a sand core, in cement, fiber, or resin, preferably with a flexible mold, for example, although it is also suitable for being manufactured with multiple pieces with subsequent assembly, fusion, or welding thereof.

### Preferred Embodiment.-

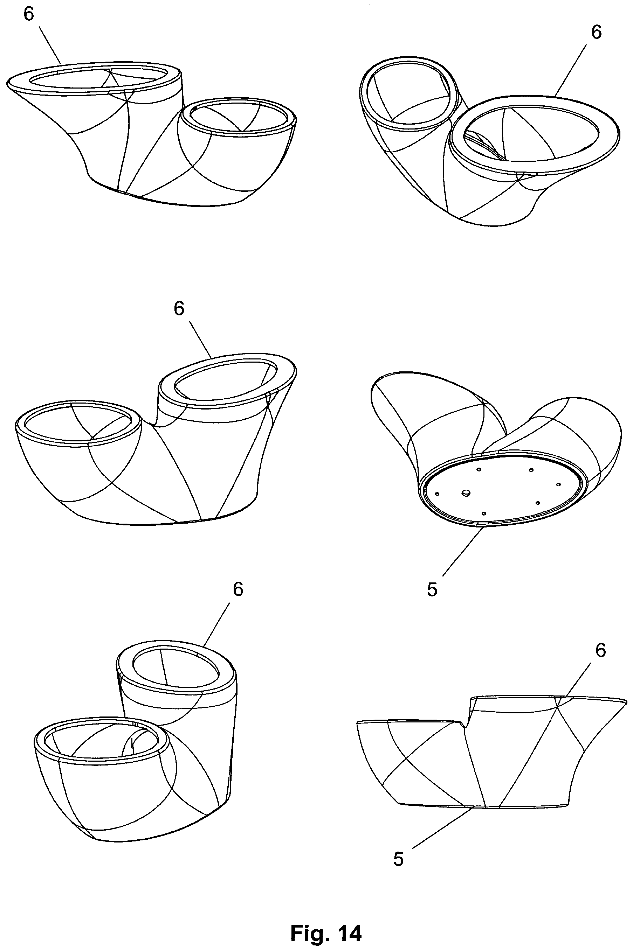

As a preferred embodiment, a pot is proposed with a single branch (N = 1) and with a coupling rotation Δ of the golden angle (Δ = Φ = π*[3-5^(1/2)]) and a non-symmetrical contour at its base, with a similarity to an ellipse and an oval, such that the resulting structure forms a single surface with smooth changes in inclination, there being continuity of the surface orientation in the regions near the lower contour of the trunk with the regions near the upper contour of the trunk of the contiguous lower module, as shown in **Figure 4****.** In this way, the loads are distributed more evenly, avoiding regions with load stress. This configuration is similar to the solutions adopted by plants in nature and improves the pot's capacity, solar capture, and the space available for the plant. No other stackable pot system with a single branch is known in the state of the art. **Figure 14** shows a pot module as a preferred embodiment in different views, while **Figure 6** shows the formation of nine structures resulting from said module for successive numbers of pots, from one module to nine pot modules.

### Structural Configuration Design Procedure:

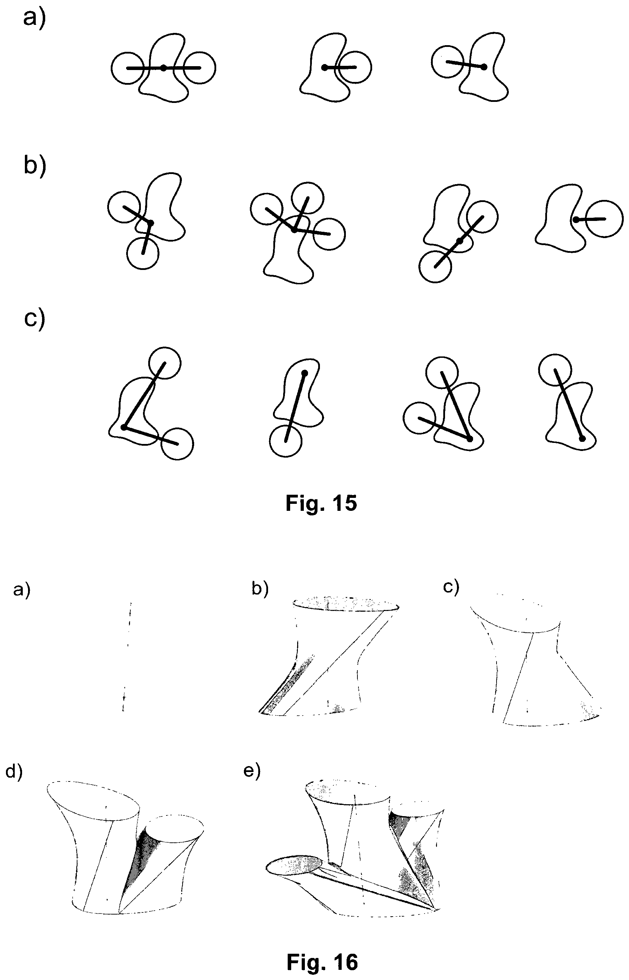

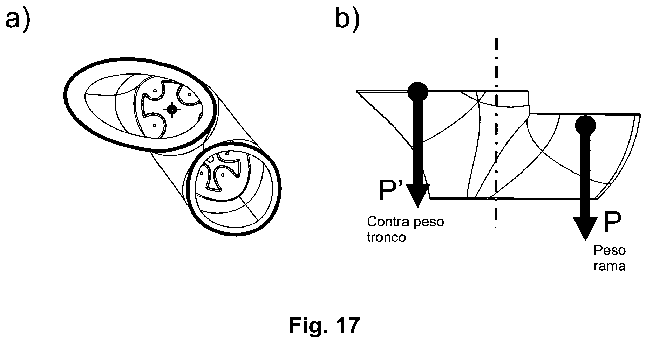

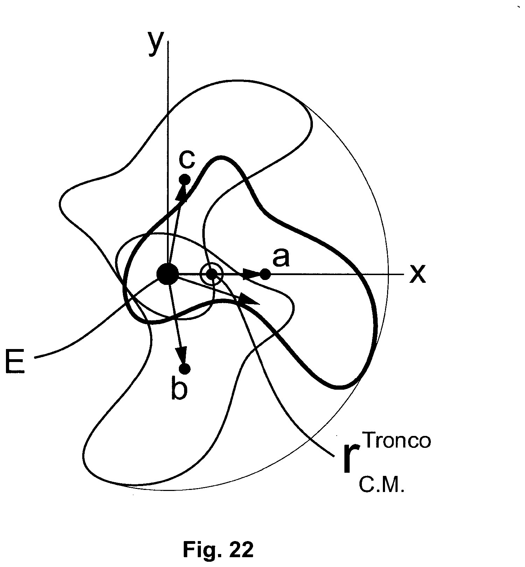

The general way to develop a practical embodiment of the invention, without being limiting, is to establish a contour that has one or several preferential regions in relation to the axis E of the structure that are compatible in scale and shape with the number and size of the desired branches and cultivation openings. In this way, the position of the branches in relation to the trunk is determined. **Figure 15a** and **15b** illustrate possible locations of the cultivation areas in relation to the approximate contour of the trunk, for a different number of branches and positions of the contour with respect to the axis E. In these cases, the aim is to locate the branch and cultivation area close to the preferential regions. Note that axis E can be located outside the contour, as in the last example of **Figure 15b****.** Likewise, **Figure 17a** presents, analogously, the upper contour and that of the branch, which also respects this criterion. **Figure 15c** shows approaches in which the cultivation surfaces are far from the axis E of the structure **(****Figure 22****),** and, consequently, are not recommended, as they worsen the stability of the system.

This contour is translated vertically along the axis E by a distance H, which corresponds to the height of the module. Subsequently, it is rotated by an angle Δ, according to design criteria. Except for specific requirements, it is convenient for it to be the golden angle, as shown in **Figure 16a****.** The contours of the cultivation opening(s) are positioned on a plane at a height h with respect to the base of the module, with h being the design parameter. This process thus establishes the key contours that define the structure of the invention. To finish the process of developing the structure, it only remains to complete the surface of the trunk with a sweep, lofting, or similar operation **(****Figure 16b****)** that goes from the contour of the base to the upper part of the trunk, both completely defined, and to attach the branch or branches according to their previously defined position **(****Figures 16c** and **16d****).** Subsequently, it is possible to refine the structure in an optimization process according to the established design criteria (weight, capacity, aesthetics, etc.).

In general, any interpolation of the surface that goes from the lower to the upper contour of the trunk provides a convenient displacement of the center of mass and of the trunk, generating a preferential region or regions (unless said lofting operation is extremely exotic in a way that contributes to adding more mass in the region of the branches).

On the other hand, it is important to emphasize that the geometry of the invention allows, by means of a lofting between the contour of the trunk's base and the contour of the branch, for the load of the branch to rest on and be transmitted directly to the base of the module, and this is only possible thanks to allowing contours without a specific symmetry, which is a relevant difference with respect to conventional solutions that propose cantilevered, balcony-type branches.

### Fundamentals of the Technical Effects.-

As has already been explained, the invention enables branches to be closer to the axis of the structure, which results in a reduction of the module's torque, and the system's torque, whose contribution is proportional to the distance D between the center of mass of the load and said axis.

Any arbitrary contour in the xy plane that generates a surface by means of a sweep with twist operation along the z-axis, which will be the axis of the structure E, or any type of lofting operation provided that the two end contours of the generated surface are displaced by a distance H and rotated with respect to the z-axis, one in relation to the other, will necessarily have, for purely geometric reasons (since the contour is a closed curve and the distance between the axis and the points of the contour varies, necessarily having some minimum and some maximum) regions where the surface of the trunk is closer to the axis, and three-dimensional regions farther away. This is true for any contour except in the case where the contour is a circle in the xy plane, centered on the axis of the structure, and generates a cylindrical surface. We will call these three-dimensional empty spaces closer to the axis and their surroundings preferential regions, and they are suitable for the branches and/or cultivation openings of the pot to be located there. This is the foundation for generating the trunk of the structure of the invention.

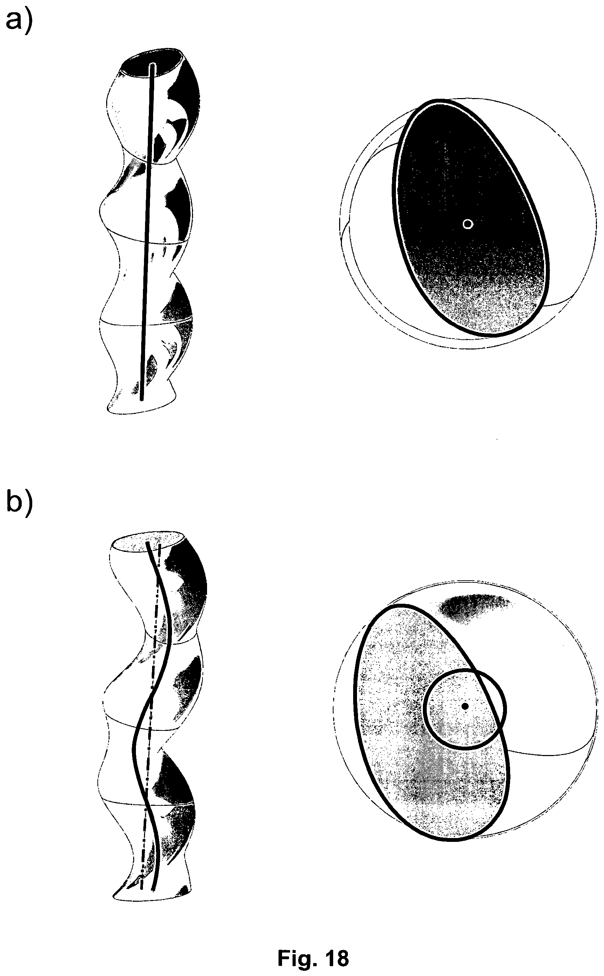

**Figure 18** illustrates two cases of a torsioned trunk, both generated from the same arbitrary contour and having their ends twisted relative to each other by an angle of four times the golden angle. The cases differ in the positioning of the contour's center of mass: in Figure 18a, it coincides with the structure's axis, while in Figure 18b, it is offset from the axis. Due to the described operation, preferential regions are generated on the surface that are closer to the axis of the structure and empty spaces near them. In both cases, the axis E and the center of mass of the contour in the sweep with twist operation are indicated, which in the first case is a straight line coinciding with the axis and in the other, in this specific case, a spiral curve. It is obvious that when the center of mass of the contour does not coincide with the axis of the structure, it is possible to unbalance the center of mass of the trunk itself to balance it with the foreseeable weight of the branch.

Next, we will analyze different contours of trunks of vertical garden structures.

For convenience, we parameterize the contour r(θ) located in the XY plane according to a polar coordinate system centered on the axis E of the structure. Thus, we say that the contour has a Symmetry S with respect to the axis E if, for the largest value of S, it satisfies that r(θ) = r(mod(θ,S)), where S is a positive integer and mod is the remainder function after division.

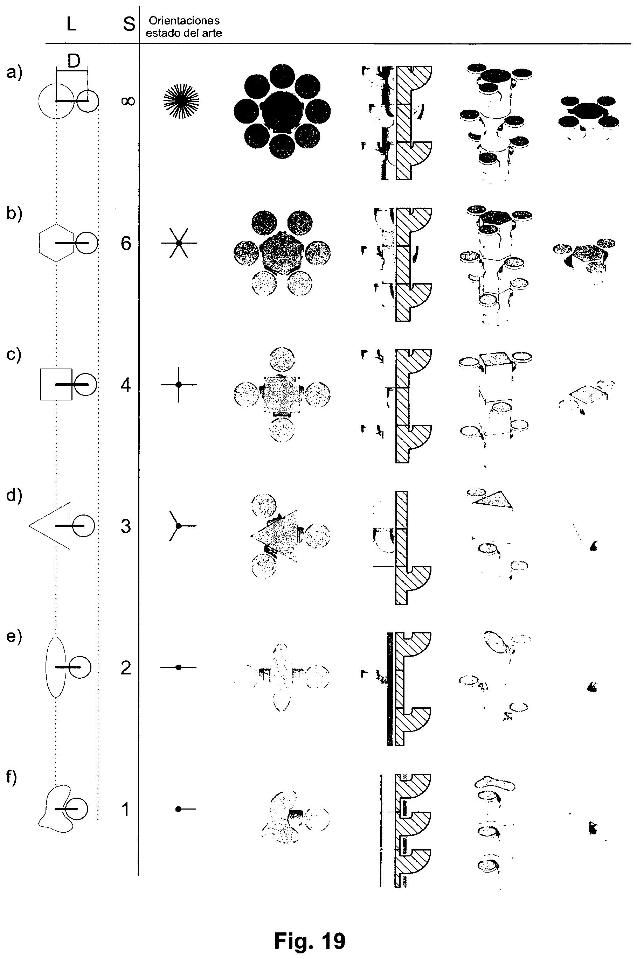

**Figure 19** illustrates configurations of stackable pots with different contours as bases, all with exactly the same area, which generate the trunk by an extrusion operation. The first column illustrates a scheme of the contour of the trunk and the cultivation opening with a single arm, which is located in preferential positions, although in our analysis it can be considered that the particular configuration has more arms, but that the load of the presented arm is much greater than the rest. In the comparison, it is considered that the systems have the same stabilizing plate of the same diameter anchored to the base of the structure, which has been omitted for simplicity. Figure 14 represents some existing and/or obvious configurations where the Symmetry S with respect to the axis E is shown, and the possible orientations, as well as an example of said configuration showing a top view, a side view, with a cross-sectional view in one of its half-planes, and a three-dimensional view of the structure and the module.

**Figure 19a** presents a typical module with a cylindrical trunk of area A, with a branch that is at a distance D from the axis E. If the center of mass of the module with the plant and the branch projected on the horizontal plane falls outside the convex hull of the system, the system collapses and falls. It turns out that a cylindrical contour centered on the axis is a bad example for trying to bring the arm closer to the axis of the structure and reduce the distance D. In fact, we will see that any extruded contour with smooth changes from the axis allows for better centering of the loads, increasing the stability of the structure.

On the other hand, since its base is a circle (S = infinity) with respect to the system's axis, it is possible to distribute the pots as convenient, as a circular contour allows for any orientation.

Analogously, **Figure 19b** shows a hexagonal contour and a branch. In this case, for the specific location in the figure, a slight reduction in the distance D is observed with respect to Figure 4a. In this way, for the same diameter, weight, and volume of the structure, considering that both are anchored to a stabilizing plate of equal diameter, the structure of Figure 4b is slightly more stable. However, its symmetry is 6, which means that the system can only orient its modules in six possible ways.

Similarly, other structures are presented based on a square, triangle, ellipse, and an arbitrary contour whose center of mass is centered on the axis E, all with equal areas. As the regular polygon has fewer sides, the stability of the system improves, but, at the same time, its symmetry is reduced, which limits the number of orientations, resulting in more stable structures but with a very limited distribution of module orientations, which in practice is a problem.

In particular, **Figure 19e** presents a configuration with an elliptical base which, if the structure is composed of identical modules, only allows for two orientations (S = 2), making it impractical.

An example is also presented **(****Figure 19f****)** in which the symmetry is 1 (S = 1), so it does not allow for stacking by rotation: the modules only have one orientation and, generally, are of no interest.

From this exposition, it is observed that as the symmetry is lower, more proximate preferential regions can be obtained and, therefore, potentially, greater stability, although, as a trade-off, greater stability restricts the number of orientations. The limiting case is with an arbitrary contour (symmetry S = 1) where stability could potentially be improved, but it has no practical sense because all the modules would be oriented the same way.

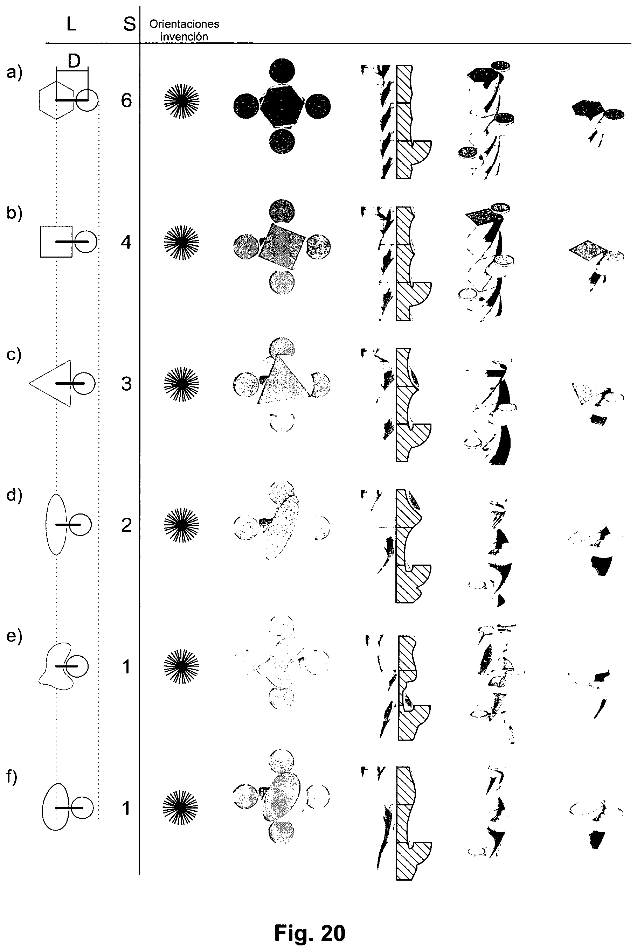

**Figure 20** shows configurations similar to those in Figure 19 but with the trunk is twisted with a torsion. For convenience, to improve the understanding of the explanation, it is rotated by the angle Δ = 90°. On the other hand, such torsion creates preferential regions where the branches can be located. In this way, with a simple torsion, we can take advantage of the benefits for stability improvement of contours with low symmetry S contours. This concept enables a wider range of possible orientations to be controlled. The 90° arrangement shown in the examples is provided for illustrative purposes only and is not intended to be limiting. In fact, it allows for a torsion of the golden angle, which, thanks to its irrational nature, allows covering the entire spectrum of possible orientations. This result is shown in the "orientations" column and represents a non-trivial and important technical advantage, as we can improve stability (or capacity per area, or the space available for the plant) and orientation, improving the distribution of the plants, minimizing interference between neighbors and the area occupied by the structure, simultaneously, with a torsion of the trunk.

Note that in both **Figures 19** and **20****,** the differential center of mass of the trunk does not vary and coincides with the axis E of the structure, understanding the differential center of mass of the trunk in z as the center of mass of the differential portion dz of the trunk.

We can go further in the conclusions and realization of this research and development: it is possible to vary the position of the trunk not only to generate preferential regions where the branches can be located, but also to vary the differential center of mass of the trunk to compensate or regulate, totally or partially, the weight of the branch. This can be done with any arbitrary contour, although some are more propitious and offer more advantages or are more viable according to other criteria.

Thus, it is possible to develop, by design, modules that are purposely unbalanced in order to be more balanced with an expected load, specified in the design. **Figure 17b** shows a preferred configuration that illustrates this strategy where the left part of the trunk has a peak-shaped protrusion that, when filled with substrate, partially counteracts the torque generated by the ramification with the plant.

**Figure 21** captures the core of the present invention **(****Figures 21b, 21c, 21d****),** exhibiting its advantages and contrasting it with a conventional configuration based on a cylindrical trunk **(****Figure 21a****).** All cases are showed with the same scale and have exactly the same trunk volume, and the same base area, and all except Figure 21d has the same cultivation opening area. As in **Figure 19****,** for simplicity, the stabilizing plate is not shown, although it must be assumed that all structures are anchored to a circular stabilizing plate of identical diameter. In all cases, a side view is presented, with the right half-plane in cross-section view and a top view, which, for reference, shows the circumference of the envelope of the conventional system superimposed. The structure and a module are also shown in perspective.

**Figure 21b** shows an embodiment of the proposed invention in which the plants have more space in the vicinity of the cultivation area for their growth compared to the conventional solution **(****Figure 21a****).** Furthermore, it allows the trunk itself to cast less shade on the plant, resulting in a configuration with greater solar radiation.

**Figure 21c** presents another embodiment of the proposed invention in which the branch and the cultivation area are closer to the axis E of the structure, reducing the torque caused by the weight of the plant, which gives it greater stability compared to the conventional solution **(****Figure 21a****).** In addition, by recessing the branches, the resulting system is significantly more compact, which reduces the area occupied by the structure, for the same volume and cultivation area.

Finally, **Figure 21d** illustrates an embodiment of the proposed invention in which the arm and the cultivation area are significantly larger, improving the capacity compared to the conventional solution **(****Figure 21a****).**

In all these cases, the trunk undergoes a variable change in its center of mass along its axis.

On the other hand, the invention is valid for any number of branches. For example, **Figure 16d** shows a contour with one branch, while **Figure 16e** shows one with two branches, in which all these examples have identical contours.

The procedure for creating the surface of the trunk, as has already been mentioned, is a lofting operation, which is difficult to parameterize in practice to be analyzed analytically. Therefore, in the design, there is generally a try and error iterative process, although it is surprisingly tolerant to the arbitrariness of the contour, position, and shape of the branches, as in practically all cases-except for the exotic cases mentioned-they experience improvements with respect to conventional structures.

Another procedure for creating structures of the present invention, which is much easier to analyze and implement, although in some cases it does not offer optimal results and requires more subsequent optimization work, is simply to create a linear twisted swept of the original contour by the angle Δ, which corresponds to the cases in **Figure 20****.** With this configuration, it is easy to demonstrate analytically that the distance between the center of mass of the trunk and the axis of the structure is reduced and is easily adjustable with the angle of rotation. Furthermore, it is obvious that said twisted swept generates preferential regions suitable for locating the arms, for any type of contour, even for a circle, as long as the symmetry with respect to the axis is zero S = 0, that is, it is off-center with respect to the axis E of the structure.

Before moving on to an analytical study, a visual and intuitive explanation is anticipated: if we approximate the twisted trunk to, for example, three equal, equi-rotated slices (a more rigorous analysis decomposes the trunk into infinite differential slices, but the concept is the same), each-differential-slice has a center of mass, in Figure 22 **a, b,** and c. Each center of mass has the same weight, so the center of mass of the trunk is the arithmetic mean of the centers of mass of the slice, and, necessarily, due to being rotated, the total center of mass corresponding to the trunk is closer to the axis E of the structure than if a trunk with the same non-rotated, but extruded, contour is considered. On the other hand, the volume in both cases, rotated trunk versus extruded trunk, is identical (the contribution of each slice is identical, regardless of whether it is rotated or not). Therefore, the simple rotation of the trunk modulates the center of mass. Note that this argument is valid for any arbitrary contour whose center of mass does not coincide with the axis E, as is the case in Figure 3b.

Indeed, if we assume that the generatrix contour of the trunk is at z = 0 and we choose a coordinate system such that the x-axis is aligned with the particular center of mass ${r}_{CM}^{contour} = {x}_{CM}^{contour} {u}_{x}$, as shown in Figure 22, and that the trunk is the result of a twisted sweep with rotation of Δ from z = -H/2 to z = H/2, then, normalizing the height (H=1), the center of mass of a differential slice of the trunk located at z is: ${r}_{CM}^{contour} \left(z\right) = {x}_{CM} cos \left(Δ z\right) {u}_{x} + {x}_{CM} sin \left(Δ z\right) {u}_{y} + z {u}_{z}$

The center of mass of the trunk will be the arithmetic sum of said centers of mass: ${r}_{CM}^{trunk} = \frac{\int rdm}{\int dm} = \left(\frac{1}{V}\right) \int rdV = \left(\frac{1}{V}\right) A \int {r}_{CM}^{contour} \left(z\right) dz$ where it is assumed that its density is a normalized constant, with dm = dV = Adz being the differential of the trunk's volume and A the area of the contour.

Substituting into and integrating between -H/2 and H/2 yields: ${r}_{CM}^{trunk} = \frac{sin \left(Δ/2\right)}{Δ / 2} {x}_{CM}^{contour} \left(z=0\right) {u}_{x} .$

That is, the distance between the center of mass of the trunk and the axis of the structure E is proportional to the function sinc(Δ/2), which for Δ = 0 is 1, representing the classic case of an extruded (non-rotated) trunk, and it decreases for any other non-zero angle. Therefore, the twisted swept of the trunk produces a modulation of the center of mass with respect to the system's axis, for any arbitrary contour, such that the resulting center of mass from the rotation of the trunk is located closer to the axis E of the structure, in comparison with a non-rotated trunk. This conclusion is derived for any arbitrary contour, independent of its shape.

From all the above, it is deduced that the invention presents a greater structural stability against load imbalances from heterogeneous plants than in the analogous cases cited in the state of the art, when compared for the same occupied area per pot. By presenting greater stability, the invention thus has leeway to enlarge or radially extend its branches, improving its capacity per area, the space available for the plant, and sun exposure. Furthermore, said torsion of the trunk allows for optimizing the distribution of the pots and for the branches to rest directly on the base of the module, preventing them from being cantilevered.

## Claims

1. **A modular structure of stackable pots or pot holders with improved sun exposure and stability,** of the type of structures constituted by self-supporting pot or pot holder modules, with the simultaneous function of system support and pot, coupled vertically, in which the hollows containing substrate or pots occupy different positions with respect to neighboring modules to balance structural stability, facilitate light exposure and the growth space of the plants, each of them being formed by a body (1) with a trunk (2) that occupies a height H along its vertical axis (3) and one or a determined integer number N of branched arms (4) attached to the trunk, arranged such that the arm "i" forms an angle δi projected on a horizontal plane with respect to its neighboring arm "i+1", with the branched arm or arms being hollow, as cultivation openings, and the lower part of the trunk of each module, where the hollows of the arms converge, being closed, the base of the module being the lower surface of the trunk, **characterized in that** the contour (5) of the base of each module, being of an arbitrary shape that is not a circle centered on the vertical axis (3), is identical in geometry to the contour (6) of the upper part of the trunk of the same module, rotated by an angle Δ and displaced by a height H with respect to the vertical axis, such that the coupling between modules occurs between the contour (5) of the base of the upper module and the contour (6) of the upper part of the trunk of the lower module, with both contours matching, and because the arms (4) with the cultivation openings are located in the zones of the trunk surface closest to its vertical axis, present as a consequence of the torsion produced by the rotation of the end contours of the trunk, the structure resulting in a single continuous exposed surface, with the arms of the modules thus coupled as hollow bodies distributed in successive ramifications with different degrees of rotation.

2. The modular structure of stackable pots or pot holders with improved sun exposure and stability, according to claim 1, **characterized in that** its surface has smooth changes and is free of sharp edges.

3. The modular structure of stackable pots or pot holders with improved sun exposure and stability, according to claim 1, **characterized in that** the angle Δ of rotation between the end contours of the trunk (2) with respect to the vertical axis is the golden angle divided by the number of arms, such that Δ = Φ/N = π*[3-5^(1/2)]/N, and the branched arms (4) of each module follow an equiangular distribution according to which the angle δi of projection of the arms "i" on the horizontal plane with respect to their neighboring arms "i+1" is 2π/N, such that δi = 2π/N.

4. The modular structure of stackable pots or pot holders with improved sun exposure and stability, according to claim 1, **characterized in that** the angle Δ of rotation between the end contours of the trunk (2) with respect to the vertical axis is the golden angle multiplied by the number of arms, such that Δ = ΦN = π[3-5^(1/2)]*N, and the branched arms (4) of the successive modules follow a distribution according to which the angle δi of projection of the arms "i" on the horizontal plane with respect to their neighboring arms "i+1" is the golden angle, such that δi = Φ.

5. The modular structure of stackable pots or pot holders with improved sun exposure and stability, according to claim 1, **characterized in that** each module has only one arm, N = 1, and the contour of the base (5) is not circular nor a regular polygon.

6. The modular structure of stackable pots or pot holders with improved sun exposure and stability, according to claims 3, 4, and 5, **characterized in that** each module has only one arm, N = 1, and the angle Δ of rotation between the end contours of the trunk (2) with respect to the vertical axis (3) is the golden angle, such that Δ = Φ = π*[3-5^(1/2)].

7. The modular structure of stackable pots or pot holders with improved sun exposure and stability, according to claim 1, **characterized in that** the branched arm or arms (4) attached to the trunk of each module are straight or curved, simple or composed of other arms.

8. The modular structure of stackable pots or pot holders with improved sun exposure and stability, according to claim 1, **characterized in that** the component modules of the structure are identical.

9. The modular structure of stackable pots or pot holders with improved sun exposure and stability, according to claim 1, **characterized by** having a surface finish in surrounding slices (7) between the lower base of the trunk and the upper part of the arms and trunk.

10. The modular structure of stackable pots or pot holders with improved sun-exposure and stability, according to claim 1, **characterized in that** the contours of the upper part (6) and base (5) of the trunk of each module are provided, as mechanical systems for coupling and connection between superimposed modules, with:
a) A system of key pieces (8) with through-holes on a peripheral flange at the contour of the upper part, and through-bores for threaded screws (9) with a nut (10) in the contour of the base; or,
b) A system of through-bores (11) for threaded screws with a nut in the contours of the upper part and base; or,
c) A system of a peripheral fitting guide (12) in the contour of the base, complementary to the perimeter of the hollow contour of the trunk of the upper part.

11. The modular structure of stackable pots or pot holders with improved sun exposure and stability, according to claim 1, **characterized in that** the hollow of the branched arm or arms of each module is occupied by substrate and plants.

12. The modular structure of stackable pots or pot holders with improved sun exposure and stability, according to claim 11, **characterized by** integrating a gravity-fed irrigation system for the hollows with substrate and plants, constituted by one or more water reservoirs (13) in the hollows of one or more modules, and a downpipe (14) from the upper reservoir, optionally provided with a water level detector (15), and passing through to the hollows of the lower modules, connecting where applicable to the rest of the reservoirs, with outgoing ramifications from the downpipe and/or from the lower reservoirs, ending in water dispensers (16) by means of porous material or a drip device.

13. The modular structure of stackable pots or pot holders with improved sun exposure and stability, according to claim 1, **characterized in that** the hollow of the branched arm or arms of each pot module is coupled directly by its contour, or by means of a connecting piece, to the contour of the base of another pot module, forming a fractal structure of ramifications with successive stacked pot modules.

14. The modular structure of stackable pots or pot holders with improved sun exposure and stability, according to claim 1, **characterized in that** the hollows of the arms of the modules are occupied by individual pots or containers, forming a stackable modular pot holder structure.

15. The modular structure of stackable pots or pot holders with improved sun exposure and stability, according to the preceding claims 1 to 14, **characterized in that** each pot module is defined by the geometry resulting from two or more contiguous pots, forming its own pot module.
